# EUROPEAN PATENT APPLICATION

(11) **EP 3 242 438 A1**
(43) Date of publication of application: **08.11.2017**
(21) Application number: 16382201.8
(22) Date of filing: 06.05.2016
(51) Int. Cl.: H04L 12/18, H04L 12/58

(54) **METHOD FOR SYNCRONIZING CONVERSATIONS OF GROUP MESSAGING SERVICES IN MESH NETWORKS**

(71) Applicant: Telefonica Digital España, S.L.U., 28013 Madrid (ES)
(72) Inventor: BEN-YOCHANAN, Noam, 28013 MADRID (ES); NEYSTADT, John, 28013 MADRID (ES); COHEN, Gil, 28013 MADRID (ES)
(74) Representative: Herrero & Asociados, S.L.

(57) **Abstract**

A method for synchronizing a group conversation in a mesh network (14), comprising:
- receiving information from a group server (S) of a group messaging service by a group member (13) of the group conversation; and,
- sending from the group member (13) to the other group members (11, 12), when the group member (13) of the group conversation is connected to the mesh network (14), on which other group members (11, 12) synchronized with the group server (S) and belonging to the group conversation are discovered:
▪ a timestamp for the information, which arrived at the group server (S) at a later time, received by the group member (13);
▪ all the information received from the group server (S) which reached the group server (S) between the last time when the other group members (11, 12) synchronized with the group server (S) and the timestamp.

## Description

### Field of the invention

The present invention has its application within the telecommunication sector, especially, deals with the field of providing group messaging services (e.g., WhatsApp, Facebook Messenger, Telegram, Line, Wechat,...). More particularly, the present invention refers to a method for syncronizing group conversations occurring in disconnected mesh networks.

### Background of the invention

There are various products that do group messaging using a group server, e.g. WhatsApp, Facebook, etc. The service offered by Jott.com has a combination of group messaging and mesh communications using AirChat. AirChat is an anonymous wireless communications and connectivity tool that makes communication and connectivity possible in situations where the Internet is locally disabled, censored or out of service or in areas were cellular and Internet are not available, such as at sea or in mountainous areas. Anther examples are FireChat and The Serval Mesh, which enable chat over mesh networks, as well as routing to the internet. Apple multi-peer connectivity allows for mesh networks between iPhones.

However, none of the aforementioned solutions combine the benefits of a mesh network and those of a server-based communications system. For instance, Firechat Public Chatrooms only work under a server-based approach, that is, messages sent to a public chatroom cannot be distributed directly to other users via the mesh network bust just can be distributed through the server.

Users can be members of groups on a group server (e.g. WhatsApp), and when the user's terminal device is connected to the messaging server, every message sent to the group is received by the whole group. A server based group can synchronize individuals when they re-connect, but has no way of allowing disconnected members to communicate with each other, even if they are in close proximity to one another. Mesh networks can be created in isolated locations, e.g. sparsely inhabited, underground, etc. While mesh networking messaging already exists, it is not an extension of server based group messaging, but rather a standalone way of communication. In mesh networks it is possible to have n-way conversations. When one or more of the group members is on the mesh but not on the internet, normally other users that are not connected to the same mesh network could not be able to send them messages, receive delivery notifications or receive messages from them.

Summarizing, current solutions allow either chats over mesh or chats through a group server over the internet. Chats over mesh do not ensure universal distribution of the messages as they can only reach to users that are connected to the same mesh network. On the other hand, chats through a group server over the Internet ensures distribution to all recipients with an Internet access, but cannot reach to users that are not connected to the Internet but just to a mesh network.

Currently server based group communication and mesh based group communications are never connected: once a user's terminal device cannot connect directly to a group server, it cannot communicate with the group members. Having mesh communications allows talking to mesh members, but there is no connection between the server-based group and the mesh group, and definitely no synchronization or message sharing between the two.

There is no way to synchronize the mesh conversations to the group server and vice versa. There is also no way to sync multiple mesh devices which each have a different view of the conversation because of the difference in the last time they were connected to the group server or the mesh. Lastly, there is no notion of store-and-forward - sync the conversations you've received in the past with either your mesh peers or the group server.

Therefore, there is a need in the state of the art for mesh connected group members to be able to communicate with each other as if they were connected to a group conversation of a group messaging service.

### Summary of the invention

The present invention solves the aforementioned problem and overcomes previously explained state-of-art work limitations by providing members of a group conversation, defined in a group server, with means for:
1. Communicating with any member of the group, while all or some of them are disconnected from the group server.
2. Updating the group server when all the group members reconnect with all the messages that they sent and received on a mesh network, the members of the group conversation which are connected to the mesh network forming a mesh group.
3. Synchronizing each member's presence to the group conversation and vice versa.
4. Updating the mesh group with all the messages received from the group server
5. Relaying messages while the member is connected to both the mesh and the Internet:
   a. From the mesh to the group server
   b. From the group server to the mesh
6. Storing messages (and 'message read' or delivery notifications) to forward them later during synchronization, either forwarding to the mesh group only those messages that at least one mesh member is missing or forwarding to the group server the mesh originated messages that have not been received by the group server from other mesh members.

Messages from the group server are synchronized to mesh connected group members, messages sent over mesh are synchronized to the group server, and delivery notifications can also be synchronized both ways.

Once a member connects to the group server, he/she can view the messages which were delivered while he/she was connected to the mesh but not to the group server, or vice versa. In addition, the member can view which messages were delivered and to whom while he/she was not connected to the mesh or the group server or both.

In the context of the invention, group members are network users belonging to a group conversation defined in a group server of a group messaging service.

Thus, the present invention allows group members to continue the communication over the mesh, and bidirectionally synchronize group server and mesh whenever possible, either in real-time through a relay or post fact through store-and-forward.

If one or more of the mesh members (connected to mesh network through a terminal device) are also connected to the group server (e.g. via the internet), his/her terminal device acts as a relay.

According to a first aspect of the present invention, a method for syncronizing conversations of group messaging services in mesh networks is disclosed and comprises the following steps:
- receiving information from a group server of a group messaging service by a first group member of the group conversation;
   and, when the first group member of the group conversation is connected to a mesh network on which other group members of the group conversation synchronized with the group server,
- sending from the first group member to the other group members:
   - a first timestamp for the information received by the first group member and which arrived at the group server at a later time;
   - all the information received from the group server which reached the group server between two time instants: the last time when the other group members synchronized with the group server and the first timestamp.

In a possible embodiment, before the first group member sends information to the other group members, this first group member can filter out the information received from the group server by a first timestamp, generation timestamp, which indicates time of generation of said information. Additionally, the first group member can take into account said generation timestamp in order to discard the information generated over a configurable period of time, which can be given or requested to/by the network, and so said information is not sent later on by the first group member.

In another possible embodiment, when a second group member of the group conversation is connected to the group server, with which remaining group members are synchronized, the method further comprises:
- sending from the group server to said second group member all the information received by the group server since a second timestamp for which the group server has no evidence of delivery to said second group member; corresponding said second timestamp to the time of arrival to the group server of the information received by the second group member that arrived at the group server at a later time,
- sending from said second group member to the group server all the information received from any mesh network which is not synchronized with the group server at said second timestamp, and for which the second group member has received no evidence of delivery to the group server through any mesh network.

Optionally, the method further comprises:
- receiving from any of other group members that connects to the mesh network a third timestamp for the information received by said other group member and which arrived at the group server at a later time; and
- sending to said other group member information originated by the group server and arrived at the group server after said third timestamp, and information originated by any mesh network which is not being synchronized with the group server at the third timestamp.

Another aspect of the present invention refers to a group server of a group messagins service (e.g., a Whatsapp server) which implements the above described method for syncronizing conversations of group messaging services in mesh networks.

According to another aspect of the present invention, a mobile terminal device (e.g., a smartphone, tablet, laptop, ...) is provided for implementing the above described method for syncronizing conversations of group messaging services in mesh networks.

The method and system comprising the mobile terminal devices and group server in accordance with the above described aspects of the invention have a number of advantages with respect to prior art, which can be summarized as follows:
- The present invention enables continuing group conversations while members are disconnected from the group server, getting updated from the group server whenever possible and updating the group server whenever possible. The result is a continuously converged message timeline on both the group server and on the members' terminal devices.
- The present invention combines the benefits of mesh networks, namely the ability to receive messages from peers connected through the mesh network even if there is no connectivity to the server (i.e. no Internet access), with the benefits of server-based group chats over the Internet, which ensure the distribution of all messages to all intended recipients on a store&forward basis, provided the recipients have Internet access.

These and other advantages will be apparent in the light of the detailed description of the invention.

### Description of the drawings

For the purpose of aiding the understanding of the characteristics of the invention, according to a preferred practical embodiment thereof and in order to complement this description, the following figures are attached as an integral part thereof, having an illustrative and non-limiting character:
Figure 1 shows a message flow diagram of a method for synchronizing group members of a messaging service in a mesh network, according to a possible embodiment of the invention.
Figure 2 shows a message flow diagram of a method for connecting mesh members to a group server, according to a possible embodiment of the invention.

### Preferred embodiment of the invention

The matters defined in this detailed description are provided to assist in a comprehensive understanding of the invention. Of course, the embodiments of the invention described here can be implemented in a variety of architectural platforms, operating and server systems, devices, systems, or applications. Any particular architectural layout or implementation presented herein is provided for purposes of illustration and comprehension only and is not intended to limit aspects of the invention.

A posible embodiment of the invention is a method for synchronizing conversations in a group A of a group messaging service. In order to denote the members of the group, we use the names Alice, Bob and Carol. A basic assumption is that group members can be auto-discovered on a mesh network.

In a possible example, Alice and Bob are members of the group A whose users' devices are connected through a mesh network. If a message is sent to the group when only Alice and Bob are on the mesh, the message can be forwarded by Alice to the group server as soon as she connects. The message can be forwarded to the group server when Alice is still connected to the mesh, or it can happen after Alice disconnects from the mesh and reconnects to the group server. If Alice is connected to the group server and the mesh simultaneously, her device can act as a relay and forward device of the message to the server as soon as she gets it. If Alice received a message while she was connected to the group server and disconnected from the mesh, the next time she could connect to the mesh she could forward the message to the mesh. If she is connected to both the group server and the mesh simultaneously, she can relay the messages as soon as she gets them.
When connecting to the mesh, Alice sends a time indication (timestamp) for the message received from the group server that arrived at the group server the later. The other mesh members can notify Alice of any group server originated message that have arrived at the group server after the indicated time and which they are aware of, and any mesh originated message, from any mesh, which had not been synchronized with the server at that time. Alternatively, messages from those conversations that are older than a specific time period, e.g. 24 hours (this time period is an example, which can either be configurable or requested by Alice), may not be sent to Alice, as they may be no longer relevant.

Alice could in turn send to the mesh the messages that arrived at the group server in the time period, since the mesh was synced with the server for the last time and since the time when Alice synced with the server (if this happened later), plus any message that Alice received through any mesh and that had not reached the group server. Also in this case an expiry time, e.g. 24 hours, may be set to messages, so that older, no longer relevant, messages are not exchanged.

As it can be appreciated, it is very important to track the time when messages arrive to the server, as this time is more relevant for syncing purposes than the time the message was sent. In fact, some messages may reach the server shortly after they are sent but other may take much longer, for instance if they are sent by a user connected to a mesh network that is synchronized with the server just after a long time.

Similarly, when Alice connects to the group server, the server can send all messages that it has received since the last time Alice synchronized with the server for which a delivery notice from Alice has not been received previously. Alternatively, the group server may not send messages that are older than a specific time period, e.g. 24 hours, as these messages may be considered no longer relevant for the user. Alice in turn sends to the server all messages that she has received through any mesh since its last synchronization with the server, with exception of those that had reached the server and thus had arrived to Alice from the server through other members of the mesh. Thus, it is important to track the status of each message, specifically whether the message has reached the server or not.

Alice needs to mark each message which is synchronized with the server. This way, the next time that Alice reconnects to the server, she does not offer the same message for synchronizing. On the other hand, the server also needs to keep track of the messages synchronized with each member of the group.
There is no guarantee that a group server is fully updated at any given time - the sync is best effort only. Each client that synchronizes can bring messages from one or more mesh networks. For each of those mesh networks the client could be only partially synchronized. Full server update can only be achieved if all mesh activity is stopped and all clients synchronize with the server, this situation might never happen.

In a possible embodiment, messages can be synchronized in bulk by packaging a bunch of messages in single BLOB (Binary Large Object) and unpacking it on the receiving side.

Besides the messages themselves, delivery notifications (received, read) can also be synchronized between mesh and group server. The requirement here is that each member receives all the delivery notifications for all the messages.
Another type of information that can be synchronized is presence information, such as when the last time the user was seen at. Similarly, location information can be synchronized so that last location of each member as known to the group server is shared with the mesh group members.

The group server provides identifiers (IDs) for any message sent to it directly by a group member: the ID is returned by the group server when it ACKs the message, then passed to other group members from the group server.
If a message is sent first over mesh, the originator member provides the ID and it is marked as mesh originated. This ID needs to be a UUID (Universally Unique ID) so that message IDs are not mixed up.

On mesh attached devices, all devices store all messages that they sent and received, including their IDs. When synchronization happens, and a message exchanged at a mesh network gets to the group server, then the server stores the message together with the 'ID' assigned at the mesh. It also stores a timestamp corresponding to the time when the message reached the group server, which may be shortly after it was sent or much time later if the mesh network remained isolated from the Internet for a long time.
These IDs are crucial for the synchronization method, as it helps that the group server can determine whether a message coming from a mesh network is arriving to the server for the first time or has arrived before, respectively if there is a message stored with the same ID or not.

Another approach consists of having messages with two identifiers:
- a temporary identifier for messages that are exchanged in the mesh, and that is assigned by the sender, ensuring that it is universally unique; and
- a global identifier assigned by the server whenever a message arrives at the server for the first time, either from the original sender or from any other device from the mesh network.
-

Another important part is the ability of the mesh group members to be notified when the mesh gets connected through one or more relays and when it gets disconnected.

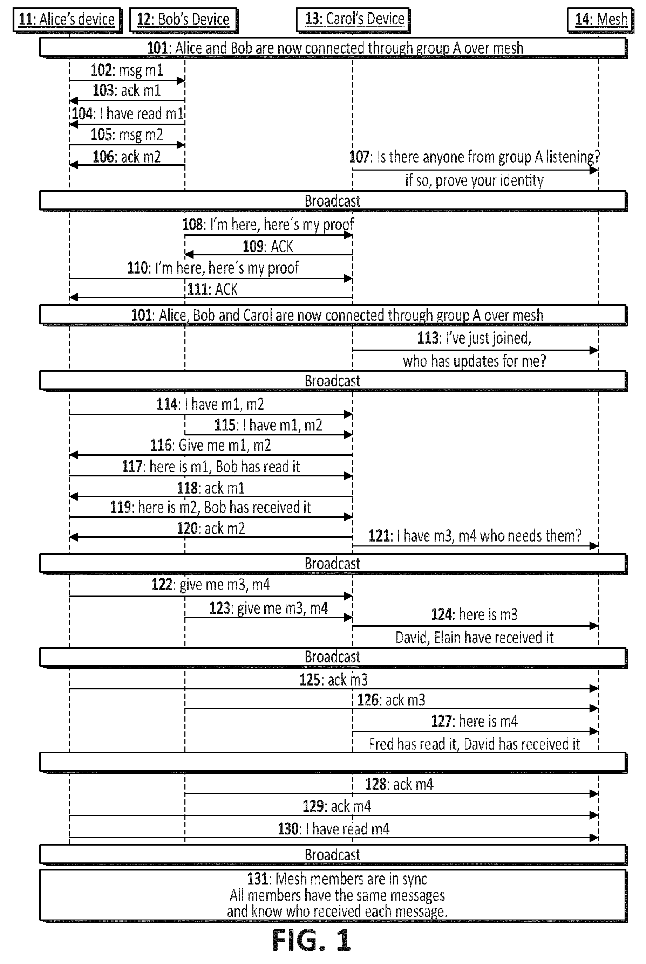

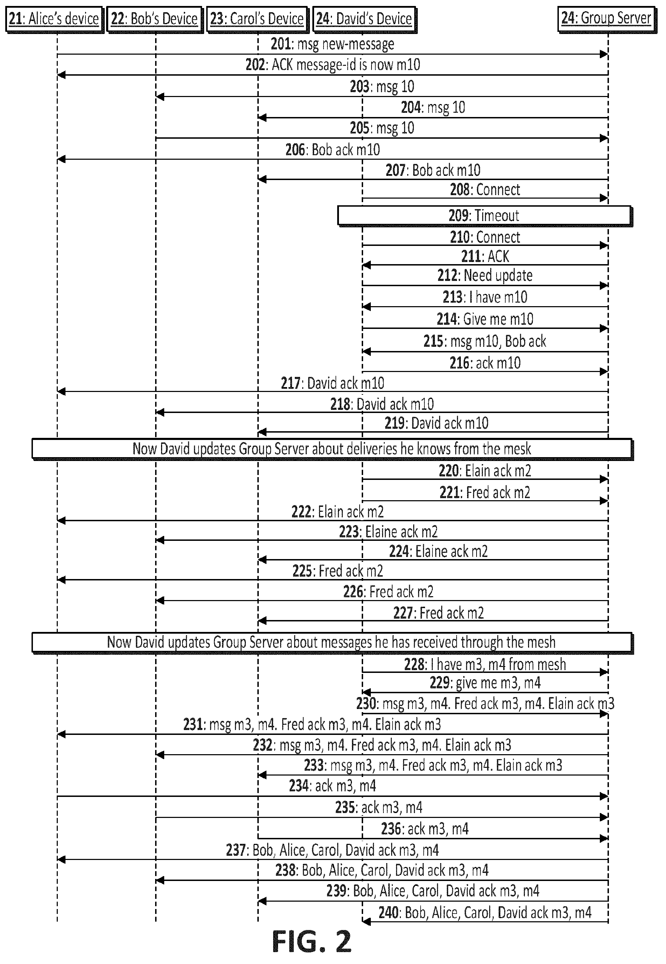

It is within this context, that various embodiments of the invention have been above disclosed and some illustrative examples are presented with reference to FIGs. 1 and 2.

FIGs. 1 and 2 are flow charts which depict a typical exchange of messages according to the teachings of this invention. For simplicity, a virtual element called "mesh" is depicted as if it were a bus on which any mesh member can broadcast information. The details of how messages are actually broadcast over a mesh, i.e. relayed from member to member, are out of scope of this invention. Instead of repeating messages unnecessarily in the Figures, i.e. when more than one mesh member needs a specific message, all informative messages are broadcast. Also for simplicity, in the context of the invention, Alice, Bob, Carol and David are names used to refer to users and the messages shown in the flow charts of FIGs. 1-2 are exchanged between these users' devices and through the mesh network or the group server.

Figure 1 depicts a sample flow diagram when a user connects to a mesh network, specifically the user Carol (13) connects to a mesh network (14) which has two users, Alice (11) and Bob (12) previously connected. References 11, 12 and 13 refers actually to users' devices (e.g., mobile phones or tablets). Steps 101-106 depict the process by which users Alice (11) and Bob (12) exchange messases through the mesh network (14). Firstly, Alice (11) sends Bob (12) a message with ID "m1" (102). Bob (12) acknowledges receiving "m1" (103) and acknowledges reading "m1" (104). Then Alice (11) sends Bob (12) another message with ID "m2" (105) and Bob (12) acknowledges receiving "m2" (106). At one point Carol (13) joins the mesh and broadcasts a discovery request for group A members (107). Bob (12) sends Carol (13) his authenticated identity (108), Carol validates it and acknowledges it (109). Alice (11) sends Carol (13) her authenticated identity (110), Carol (13) validates it and acknowledges it (111). At that point, Alice (11), Bob (12) and Carol (13) are connected (112) through group A over the mesh (14). Carol (13) broadcasts a request to the rest of the users connected to the mesh for updates (113). Alice (11) and Bob (12) send the list of messages they got on the mesh (114, 115). Carol (13) asks Alice (11) for messages m1 & m2 (116). Alice (11) provides each with indication of who read / received it (117, 119) and Carol (13) acknowledges its reception (118, 120). Then Carol (13) broadcasts the message IDs she got before joining the mesh (14), namely "m3" and "m4" (121). Alice (11) and Bob (12) ask Carol (13) for the messages they don't have (122, 123). Carol (13) broadcasts message "m3", together with information on the members of the group that have received /read them (124). Alice (11) and Bob (12) acknowledge the reception of "m3" (125, 126). Carol (13) broadcasts message "m4", together with information on the members of the group that have received/read them (127). Alice (11) and Bob (12) acknowledge the reception of "m3" (128, 129). Alice (11) reads message "m4" and notifies (130) the mesh (14). Then mesh members (11, 12, 13) are in sync, all members (11, 12, 13) have the same messages and know who received each of them (131).

Figure 2 depicts a sample flow diagram when a user connects to a group server, specifically the user David (24) connects to the group server (25) which already has other three users connected: Alice (21), Bob (22) and Carol (23). References 21, 22 and 23 refers actually to users' devices. Alice (21) sends a message (201) to the Group Server (25). The Group Server (25) acknowledges the reception and provides a message ID, "m10" (202). The Group Server (25) sends message "m10" (203, 204) recently received from Alice (21) to the rest of the members of the group connected to the Group Server, i.e. Bob (22) and Carol (23). Bob (22) acknowledges the reception (205) and the Group Server (25) informs Alice (21) and Carol (23) about Bob's acknowledgement (206, 207). At a later point user David (24) tries to connect (208) to the Group Server (25) but his request fails due to a timeout (209) as no response is received from the Group Server (25). Later on David (24) tries to connect to the Group Server (25) again (210) and this time he succeeds as the Group Server (25) acknowledges the request (211). David (24) asks the Group Server (25) for an update (212), and the Group Server (25) informs it has received message "m10" (213). As David (24) has not received message "m10", he asks for it (214). The Group Server (25) sends message "m 10" to David (24) together with the information that Bob has received it(215). David (25) acknowledges the reception of message "m10" (216). Then the Group Server (25) informs that David (24) has received "m10" (217, 218, 219) to the rest of the members (21, 22, 23), Alice, Bob and Carol. Then David (24) updates the Group Server (25) about deliveries he knows from the mesh, namely about Elain and Fred having received message "m2" (220, 221), and the Group Server (25) distributes this information (222, 223, 224) to the rest of the members connected, Alice (21), Bob (22) and Carol (23) and they acknowledge the reception of this information (225, 226, 227). Now David (24) informs the Group Server (25) about messages he has received through the mesh, specifically messages "m3" and "m4" (228). As Group Server (25) has not received those messages it asks David (24) for them (229) and David (24) provides them together with information on the members of the group that have received /read them (230). The Group Server (25) distributes these messages and related information (231, 232, 233) to the rest of the members (21, 22, 23), connected, Alice, Bob and Carol, and these members (21, 22, 23) acknowledge the reception of this information (234, 235, 236). Then the Group Server (25) updates all the connected members of the group (21, 22, 23, 24) about the members that have acknowledge the reception of messages "m3" and "m4" (237, 238, 239,240).

The proposed embodiments can be implemented as a collection of software elements, hardware elements, firmware elements, or any suitable combination of them.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for synchronizing information of a group conversation in a mesh network (14), the method **characterized by** comprising:
- receiving information from a group server (S) of a group messaging service by a first group member (13) of the group conversation; and,
- when the first group member (13) of the group conversation is connected to the mesh network (14), on which other group members (11, 12) synchronized with the group server (S) and belonging to the group conversation are discovered, the method further comprising:
- sending from the first group member (13) to the other group members (11, 12):
- a first timestamp corresponding to the arrival to the group server (S) of the information received by the first group member (13) which arrived at the group server (S) at a later time;
- all the information received from the group server (S) which reached the group server (S) between the last time when the other group members (11, 12) synchronized with the group server (S) and the first timestamp.

2. The method according to claim 1, further comprising sending from the first group member (13) to the other group members (11, 12) information received from any other mesh network which is not synchronized with the group server (S) at the first timestamp.

3. The method according to claims 1-2, further comprising sending from the other group members (11, 12) to the first group member (13):
- information originated by the group server (S) and received by the other group members (11, 12) which arrived at the group server (S) after the first timestamp,
- information originated by any mesh network, said information not being synchronized with the group server (S) at the first timestamp.

4. The method according to any preceding claim, further comprising, when a second group member (24) of the group conversation is connected to the group server (S) which remaining group members (21, 22, 23) belonging to the group conversation are synchronized with:
- sending from the group server (S) to the second group member (24) all the information received by the group server (S) since a second timestamp for which the group server (S) has no evidence of delivery to said second group member (24); corresponding said second timestamp to the time of arrival to the group server (S) of the information received by the second group member (24) that arrived at the group server (S) at a later time,
- sending from the second group member (24) to the group server (S) all the information received from any mesh network which is not synchronized with the group server (S) at said second timestamp, and for which the second group member (24) has received no evidence of delivery to the group server (S) through any mesh network.

5. The method according to any preceding claim, further comprising assigning a temporary identifier to information exchanged in the mesh network (14), the temporary identifier being universally unique and generated by an originating group member of the group conversation which sends first the information in the mesh network (14).

6. The method according to any preceding claim, further comprising assigning a global identifier to the information when received for a first time by the group server (S), the global identifier being generated by the group server (S).

7. The method according to any preceding claim, wherein the information is selected from a message, delivery notifications, presence information and pack of one or more pieces of one or more of the former types of information packaged in a single binary large object.

8. The method according to claim 1, further comprising, prior to sending from the first group member (13) to the other group members (11, 12) the information received from the group server (S), filtering out by the first group member (13) said information by a generation timestamp which indicates when the information has been generated and discard from sending all the information whose generation timestamp is within a configurable specific period of time.

9. The method according to claim 8, wherein the specific period of time is requested by the first group member (13).

10. A group server (S) of a group messaging service for synchronizing information of a group conversation in mesh networks, the group server (S) **characterized by** comprising:
- sending means for:
- sending to a first group member (13) connected to the group server (S) information received from other group members (21, 22, 23) and a first timestamp corresponding to the arrival of the information to the group server (S) ; and,
- sending to a second group member (24) all the information received by the group server (S) since a second timestamp, when a second group member (24) of the group conversation gets connected to the group server (S) which remaining group members (21, 22, 23) belonging to the group conversation are synchronized with, wherein the second timestamp corresponds to the time of arrival to the group server (S) of the information received by the second group member (24) that arrived at the group server (S) at a later time and for which the the group server (S) has no evidence of delivery to said second group member (24);
- receiving means for receiving from the second group member (24) all the information received from any mesh network which is not synchronized with the group server (S) at said second timestamp, and for which the second group member (24) has received no evidence of delivery to the group server (S) through any mesh network.

11. A mobile terminal device for synchronizing information of a group conversation in a mesh network (14), the mobile terminal device belonging to a first group member (13) of the group conversation and comprising means for connecting to the mesh network (14), the mobile terminal device being **characterized by** further comprising means for receiving information from a group server (S) of a group messaging service and means for sending to other devices of group members (11, 12) of the group conversation connected to the mesh network (14), when the first group member (13) of the group conversation is connected to the mesh network (14),
- a first timestamp for the information, which arrived at the group server (S) at a later time, received by the first group member (13);
- all the information received from the group server (S) which reached the group server (S) between the last time when the other devices of group members (11, 12) of the group conversation synchronized with the group server (S) and the first timestamp.

12. The mobile terminal device according to claim 11, wherein the sending means transmit to the other group members (11, 12) information received from any other mesh network which is not synchronized with the group server (S) at the first timestamp.

13. The mobile terminal device according to claims 11-12, wherein the receiving means further receive from the other group members (11, 12):
- information originated by the group server (S) and received by the other group members (11, 12) which arrived at the group server (S) after the first timestamp,
- information originated by any mesh network, said information not being synchronized with the group server (S) at the first timestamp.

14. The mobile terminal device according to claims 11-13, further comprising means for
- receiving from any of the other group members (11, 12) that connects to the mesh network a third timestamp for the information received by said other group member (11, 12) and which arrived at the group server (S) at a later time;
- sending to said other group member (11, 12) information originated by the group server (S) and received by the mobile terminal device that arrived at the group server (S) after the third timestamp, and information originated by any mesh network, said information not being synchronized with the group server (S) at the third timestamp.

15. The mobile terminal device according to claims 11-14, further comprising means for connecting to the group server (S) and wherein:
- the means for receiving further receive from the group server (S) all the information arrived at the group server (S) since a second timestamp for which the the group server (S) has no evidence of delivery to the mobile terminal device; corresponding said second timestamp to the time of arrival to the group server (S) of the information received by the mobile terminal device that arrived at the group server (S) at a later time; and
- the means for sending transmit to the group server (S) all the information received from any mesh network which is not synchronized with the group server (S) at said second timestamp, and for which the mobile terminal device has received no evidence of delivery to the group server (S) through any mesh network.
